# EUROPEAN PATENT APPLICATION

(11) **EP 2 106 094 A1**
(43) Date of publication of application: **30.09.2009**
(21) Application number: 08290303.0
(22) Date of filing: 28.03.2008
(51) Int. Cl.: H04L 29/06

(54) **A method for notifying an application server of changes in data stored at a home subscriber server**

(71) Applicant: Alcatel Lucent, 75008 Paris (FR)
(72) Inventor: Hua, Suzann, Lisle, 60532 (US); Berry, Nigel, Telbury GL8 8HR (GB)
(74) Representative: El Manouni, Josiane

(57) **Abstract**

One object of the present invention is a method for notifying an Application Server AS of changes in data stored at a Home Subscriber Server HSS, said method comprising a step of:
- when a Public Identity is deleted at the HSS, notifying the AS of said Public Identity deletion.

## Description

The present invention generally relates to communication networks and systems, such as in particular mobile communication networks and systems.

Detailed descriptions of such networks and systems can be found in the litterature, in particular in Technical Specifications published by standardisation bodies such as in particular 3GPP (3^{rd} Generation Partnership Project).

The present invention more particularly relates to such networks and systems comprising an IP(Internet Protocol)-based subsystem, such as in particular the IP Multimedia Subsystem (IMS), providing IP-based services.

The example of IMS (as specified by 3GPP, in particular in 3GPP TS 23.228), will be considered more particularly in the following, as an example to which the present invention applies. However the present invention is not limited to such an example, and other examples are of course possible, such as for example MMD (Multi Media Domain, as specified by 3GPP2 (3^{rd} Generation Partnership Project2), IMS-NGN, ...etc.

IMS architecture supports value-added services thanks to entities such as in particular Application Servers (ASs). To provide such services, ASs need to interact with other entities such as in particular a subscriber database also called Home Subscriber Server (HSS).

The interface between AS and HSS, called "Sh" interface, is specified in particular in 3GPP TS 29.328 and 3GPP TS 29.329. The protocol on this interface is based on the Diameter protocol.

Procedures on the Sh interface include data handling procedures, in turn including download of data from HSS to AS, and update of data in the HSS.

Procedures on the Sh interface also include subscription/notification procedures, in turn including:
- subscription to notifications (Sh-Subs-Notif) procedure invoked by an AS and enabling the AS to subscribe to receive notifications from the HSS when particular data for a specified IMS Public User Identity or Public Service Identity is updated. This procedure is mapped to the commands Subscribe-Notifications-Request in the Diameter application.
- notification (Sh-Notif) procedure invoked by the HSS and used to inform the AS of changes in data to which the AS has previously subscribed to receive Notifications. This procedure is mapped to the command Push-Notification-Request in the Diameter application.

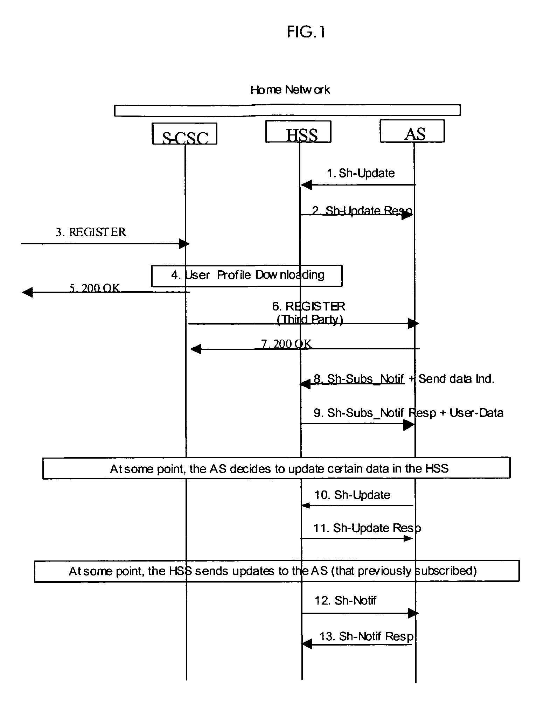

Figure 1 taken from 3GPP TS 29.328 gives examples of message flows exchanged on the Sh interface, according to the following steps:
1. A user subscribes to a new service. The operator provisions the service in an AS. The AS stores some service data for a user in the HSS, using Sh-Update (user identity, updated data e.g. repository data).
2. HSS confirms the data is updated
3. Some time later, user registers with the network
4. S-CSCF downloads the data from the HSS. Filter criteria specify that the AS wants to be notified that the end user is registered.
5. 200 OK
6. S-CSCF sends third party registration message to the application server to notify that user is registered.
7. 200 OK
8. The AS subscribes to notifications and downloads data needed for providing service from HSS, by means of Sh-Subs-Notif (user identity, requested data, service information and send data indication).
9. HSS confirms the subscription request and sends data to AS
10. At some moment, the AS decides to update user's service data e.g. repository data in the HSS, by means of Sh-Update (user identity, updated data).
11. The HSS confirms the service data is updated.
12. At some moment, user data is updated in the HSS. As the AS subscribed to notifications (step 8), the HSS sends to the AS the requested updates, by means of Sh-Notif (user identity, updated data).
13. The AS acknowledges the notification.

The information elements involved in the Sh-Subs-Notif request message sent by AS to HSS include an information element "Requested Data" which is mapped to Diameter AVP "Data-Reference"and contains a reference to the data on which notifications of change are required.

The information elements involved in the Sh-Notif request message sent by HSS to AS include an Information Element "Data" which is mapped to Diameter AVP "User-Data" and contains the changed data.

The information element Requested Data mapped to Diameter AVP Data-Reference, and the information element Data mapped to Diameter AVP User-Data, contain an XML (eXtensible Markup Language) document conformant to the XML schema for the Sh interface user profile.

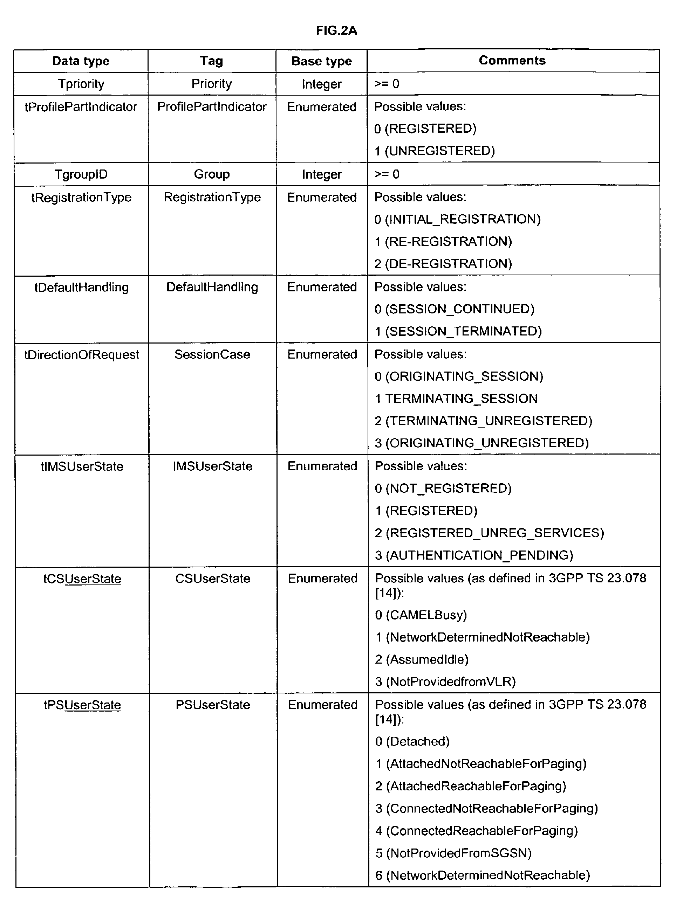

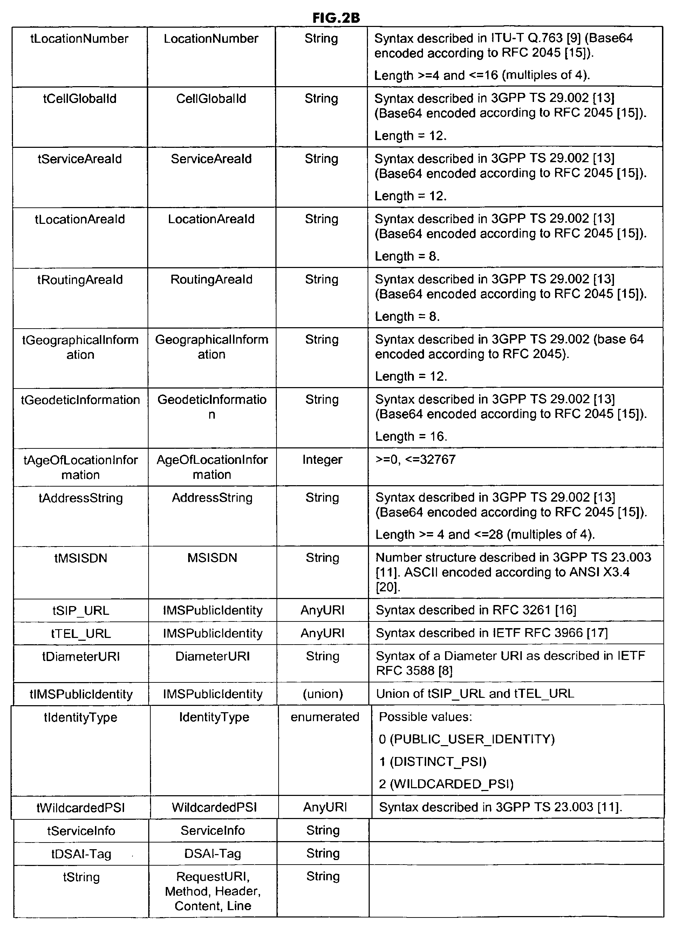

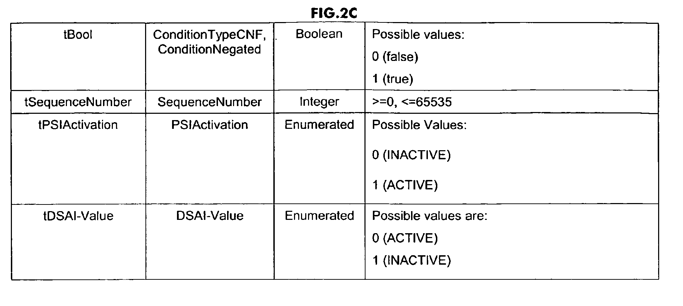

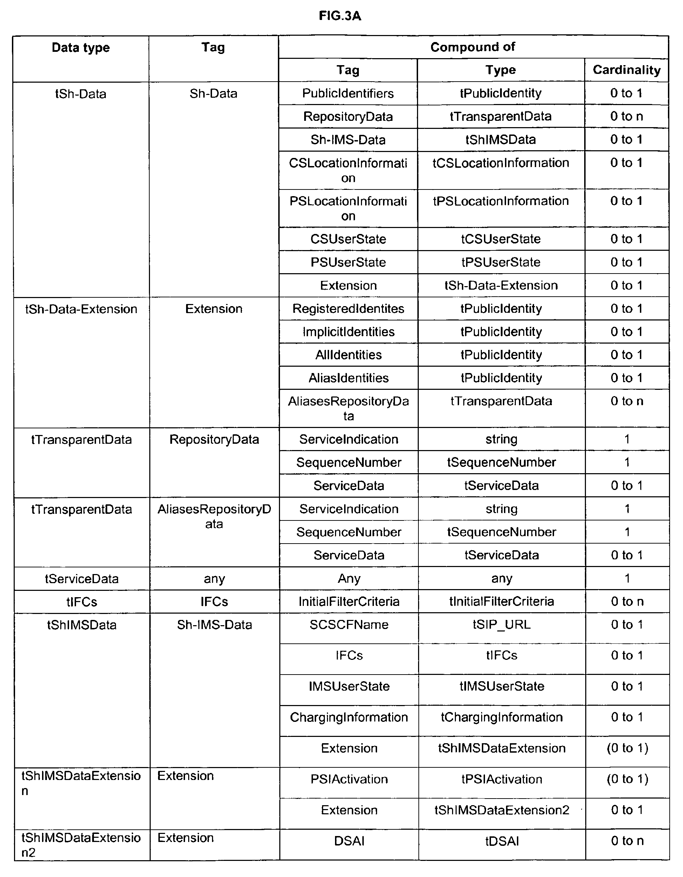

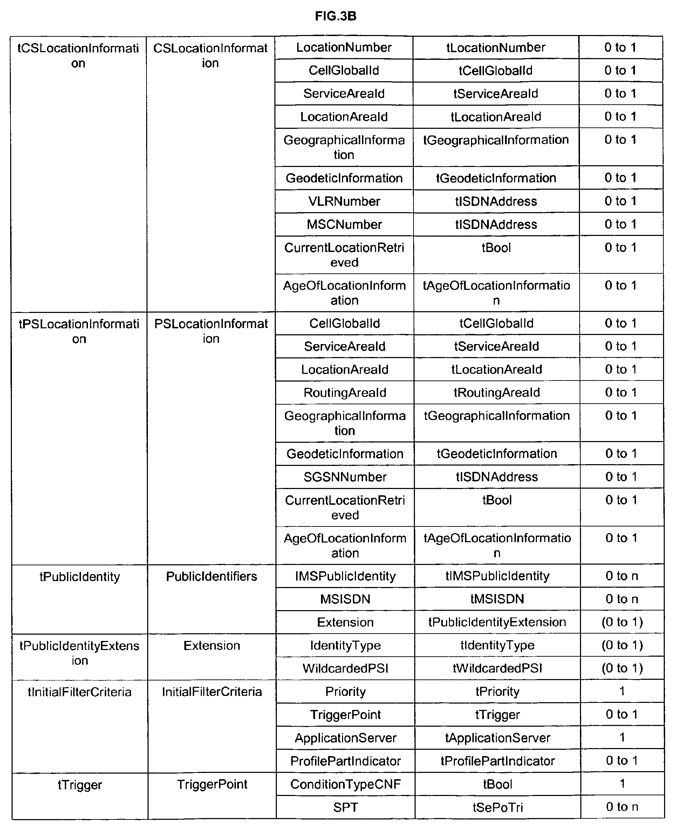

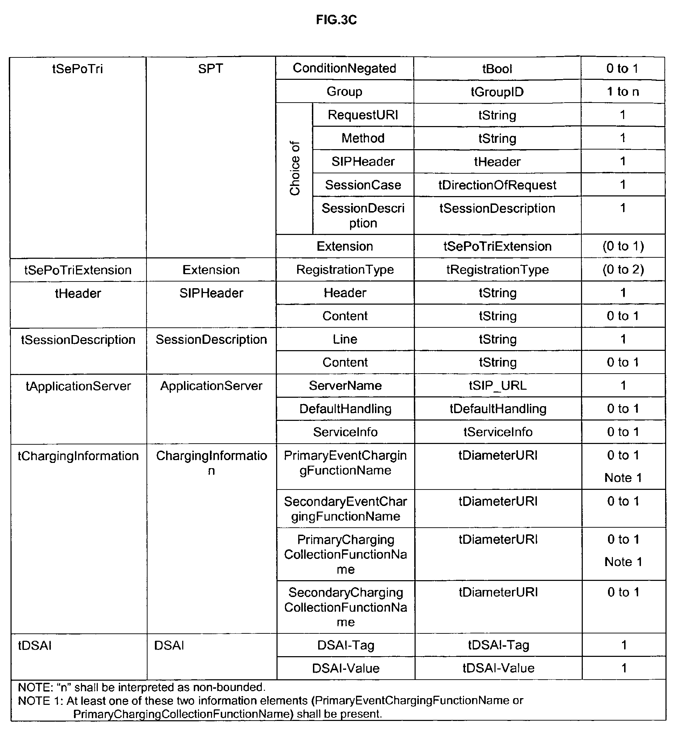

The XML schema for the Sh user profile interface, simple data types, is recalled in figures 2A-2B-2C taken from 3GPP TS 29.328. The XML schema for the Sh user profile interface, complex data types, is recalled in figures 3A-3B-3C taken from 3GPP TS 29.328.

In such context, the present invention in particular recognizes the following problems with the current state of the standard.

Currently the Sh interface does not provide any Public Identity deletion notification. Currently, there is no mechanism to notifiy an AS a PUID/PSI (Public User Identity/Public Service Identity) deletion even though the AS has data subscription(s) for the PUID/PSI at the HSS. In particular, indication of removal of subscribed data with the content of User-Data AVP is not an effective solution for PUID/PSI deletion notification to AS. Diameter Sh interface between HSS and AS currently does not support PUID/PSI deletion notification to AS. As a result, AS is not able to take necessary and prompt action for the PUID/PSI deletion.

The present invention in particular enables to solve such problems and/or to avoid such drawbacks. In particular, it is an object of the present invention to provide an effective solution for Public Identity deletion notification to AS. More generally, it is an object of the present invention to improve the support of value added services in IP based subsystems such as in particular IMS.

These and other objects are achieved, in one aspect of the present invention, by a method for notifying an Application Server AS of changes in data stored at a Home Subscriber Server HSS, said method comprising a step of:
- when a Public Identity is deleted at the HSS, notifying the AS of said Public Identity deletion.

These and other objects are achieved, in another aspect of the present invention, by a method for notifying an Application Server AS of changes in data stored at a Home Subscriber Server HSS, said method comprising a step of:
- if a Public Identity has any AS subscription to notifications, the HSS notifying AS of a deletion of said Public Identity at HSS.

These and other objects are achieved in other aspects of the present invention, by entities such as in particular a Home Subscriber Server HSS, and an Application Server AS, comprising means for carrying out such methods.

These and other objects of the present invention will become more apparent from the following description taken in conjunction with the accompanying drawings:
- figure 1 is intended to recall an example of message flows between HSS and AS on the Sh interface,
- figures 2A-2B-2C are intended to recall the XML schema for the Sh user profile interface, simple data types,
- figures 3A-3B-3C are intended to recall the XML schema for the Sh user profile interface, complex data types,
- figures 4A-4B-4C are intended to illustrate an example of XML schema for the Sh user profile interface, simple data types, according to the present invention.

One aspect of the present invention is based in particular on the following statements.

When a Public Identity (Public User Identity PUID or Public Service Identity PSI) is deleted at the HSS, the AS should be notified that the Public Identity is deleted. The AS could then take any corresponding action as necessary. However, currently the Sh interface does not provide any Public Identity deletion notification.

Therefore, the present invention proposes that when a Public Identity is deleted at the HSS, the AS should be notified that the Public Identity is deleted

The present invention also proposes that an extra value is added to the data type tldentityType so an indication can be given to the AS by the HSS when a Public Identity is deleted at the HSS.

According to the current state of the standard, as recalled in figures 2A-2B-2C, the IdentityType can have one of 3 values:
PUBLIC_USER_IDENTITY
DISTINCT_PSI
WILDCARDED_PSI.

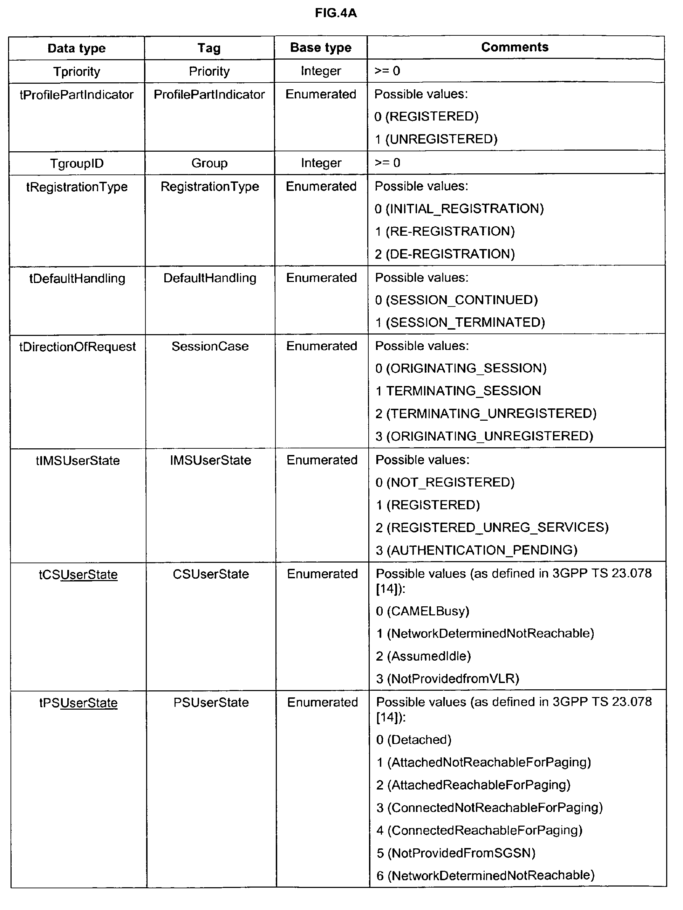

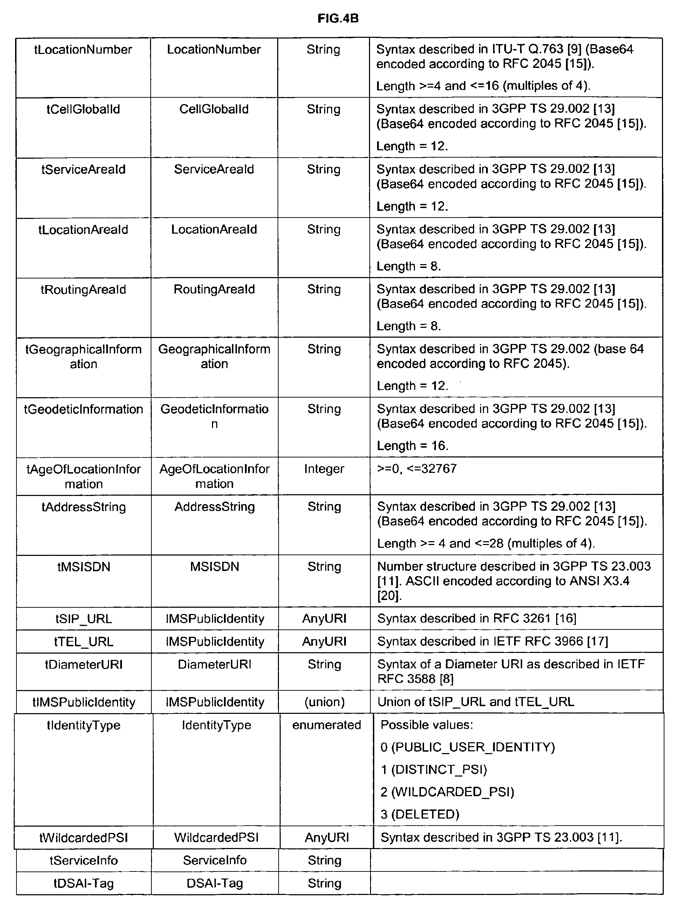

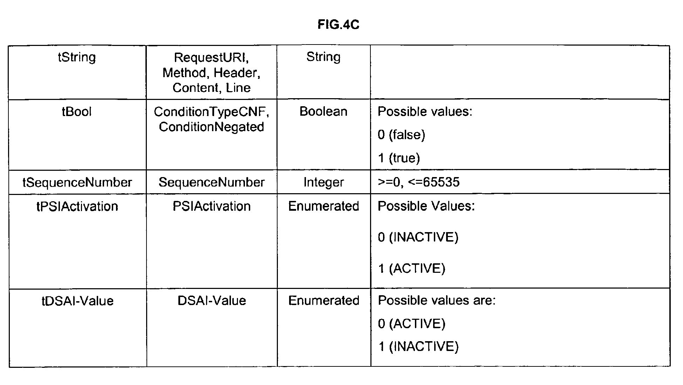

The present invention proposes, as illustrated in figures 4A-4B-4C, to add a new 4^{th} value:
DELETED
   to indicate a PUID/PSI has been deleted at HSS.

It should be noted that when HSS sends a PUID deletion notification to an AS, the AS should already know the ID is a PUID or PSI, therefore in this case the existing three IdentityType values will not be used and the 4^{th} value "DELETED"will be used.

Thus, the present invention proposes that when a Public User Identity or a Public Service Identity is deleted at the HSS, the Identity Type shall indicate "DELETED".

In other words, the present invention proposes to enhance User-Data AVP XML description in Sh interface by adding a new Identity type: "DELETED", to indicate a Public Identity (PUID/PSI) is deleted.

Still in other words, the present invention proposes a new content for Sh interface User-Data XML specification.

The present invention also proposes that the IdentityType 'DELETED' can be ignored if the AS does not understand it.

Thus, in one aspect, the present invention proposes a method for notifying an Application Server AS of changes in data stored at a Home Subscriber Server HSS, said method comprising a step of:
- when a Public Identity is deleted at the HSS, notifying the AS of said Public Identity deletion.

In an embodiment, said method comprises the steps of:
- using a notification procedure including the sending by HSS to AS of data conformant to an XML schema defining data types,
- notifying the AS of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said method comprises a step of:
- indicating deletion at HSS of a Public User Identity or Public Service Identity, with the Identity Type DELETED in Diameter AVP User-Data on which the information element Data of a Sh-Notif request message sent by HSS to AS is mapped.

In an embodiment, said method comprises a step of:
- upon notification of a Public Identity deletion, the AS taking corresponding action as necessary.

In an embodiment, if the AS does not understand said Public Identity deletion notification, the AS ignores the received notification.

In an embodiment, said method comprises a step of:
- if a Public Identity has any AS subscription, the HSS notifying AS of a deletion of said Public Identity at HSS.

Thus, in one aspect, the present invention also proposes a Home Subscriber Server HSS comprising:
- means for, when a Public Identity is deleted at the HSS, notifying an Application Server AS of said Public Identity deletion.

In an embodiment, said Home Subscriber Server comprises:
- means for using a notification procedure including the sending by HSS to AS of data conformant to an XML schema defining data types,
- means for notifying the AS of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said Home Subscriber Server comprises:
- means for indicating deletion at HSS of a Public User Identity or Public Service Identity, with the Identity Type DELETED in Diameter AVP User-Data on which the information element Data of a Sh-Notif request message sent by HSS to AS is mapped.

In an embodiment, said Home Subscriber Server comprises:
- means for, if a Public Identity has any AS subscription, notifying AS of a deletion of said Public Identity at HSS.

Thus, in one aspect, the present invention also proposes an Application Server AS comprising:
- means for receiving notifications from a Home Subscriber Server HSS, of Public Identity deletion at the HSS.

In an embodiment, said Application Server AS comprises:
- means for using a notification procedure including the sending by HSS to AS of data conformant to an XML schema defining data types,
- means for receiving notification of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said Application Server AS comprises:
- means for receiving notifications indicating deletion at HSS of a Public User Identity or Public Service Identity, with the Identity Type DELETED in Diameter AVP User-Data on which the information element Data of a Sh-Notif request message sent by HSS to AS is mapped.

In an embodiment, said Application Server AS comprises:
- means for, upon notification of a Public Identity deletion, taking corresponding action as necessary.

In an embodiment, if the AS does not understand said Public Identity deletion notification, the AS ignores the received notification.

In an embodiment, said Application Server AS comprises:
- means for receiving notifications of a deletion of said Public Identity at HSS, as long as the AS has any subscription for said Public Identity at HSS.

Another aspect of the present invention is based in particular on the following statements.

When a Public Identity (Public User Identity PUID or Public Service Identity PSI) is deleted at the HSS, if the Public Identity has any AS subscription, the AS should be notified that the Public Identity is deleted. The AS could then take any corresponding action as necessary.

Therefore, the present invention proposes that when a Public Identity is deleted at the HSS, if the Public Identity has any AS subscription, the AS should be notified that the Public Identity is deleted.

The present invention also proposes that removal (or deletion) of a Public User Identity or Public Service Identity at the HSS that has any subscription should be indicated with the IdentityType 'DELETED' in User-Data AVP. The IdentityType 'DELETED' can be ignored if the AS does not understand it.

In other words, the present invention proposes to enhance Sh Push-Notification-Request message processing procedure, such that when a Public Identity is deleted at HSS, as long as an AS has any data subscription for the Public Identity at HSS, the HSS will send a Sh Push-Notification-Request to the AS with the enhanced User-Data that indicating the Public Identity is deleted.

Still in other words, the present invention proposes an enhancement for Sh Push-Notification-Request processing.

Whenever an AS subscribes any data notification for a PUID/PSI via Sh Subscription-Notification-Request, the HSS database will keep record for such subscription. The sending of a Sh Subscription-Notification-Request is recalled for example in step 8 of figure 1.

The sending of a Sh Push-Notification-Request to the AS is recalled for example in step 12 of figure 1; however, contrary to the prior art, in the present invention a Sh Push-Notification-Request is sent to the AS as long as the AS has any subscription to notifications for the Public Identity at the HSS.

The present invention proposes that, when a PUID/PSI is deleted, if the PUID/PSI had any AS subscription record in the HSS database, the HSS shall then send a Sh Push-Notification-Request to the AS with the User Data AVP containing the Public Identity element.

The present invention also proposes that the Public Identity element shall have an attribute IdentityType with the value "DELETED". If the AS supports the PUID deletion notification enhancement, the AS may proceed for the necessary corresponding action. If the AS does not support the PUID deletion notification enhancement, the AS may ignore the received notification and take no action.

One of the important advantages of the proposed procedure is that an AS doesn't need to explicitly subscribe PUID/PSI deletion at HSS. As long as an AS has any subscription for the PUID/PSI at HSS, such as PUID's registration status or PUID's repository data change, the AS will automatically receive PUID/PSI deletion notification from the HSS when the PUID is deleted at the HSS.

Thus, in another aspect, the present invention proposes a method for notifying an Application Server AS of changes in data stored at a Home Subscriber Server HSS, said method comprising a step of:
- if a Public Identity has any AS subscription to notifications, the HSS notifying AS of a deletion of said Public Identity at HSS.

In an embodiment, said method comprises the steps of:
- using a notification procedure including the sending by HSS to AS of data conformant to an XML schema defining data types,
- notifying the AS of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said method comprises a step of:
- indicating deletion at HSS of a Public User Identity or Public Service Identity, with the Identity Type DELETED in Diameter AVP User-Data on which the information element Data of a Sh-Notif request message sent by HSS to AS is mapped.

In an embodiment, said method comprises a step of:
- upon notification of a Public Identity deletion, the AS taking corresponding action as necessary.

In an embodiment, if the AS does not understand said Public Identity deletion notification, the AS ignores the received notification.

Thus, in another aspect, the present invention also proposes a Home Subscriber Server HSS comprising:
- means for, if a Public Identity has any Application Server AS subscription to notifications, notifying AS of a deletion of said Public Identity at HSS.

In an embodiment, said Home Subscriber Server comprises:
- means for using a notification procedure including the sending by HSS to AS of data conformant to an XML schema defining data types,
- means for notifying the AS of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said Home Subscriber Server comprises:
- means for indicating deletion at HSS of a Public User Identity or Public Service Identity, with the Identity Type DELETED in Diameter AVP User-Data on which the information element Data of a Sh-Notif request message sent by HSS to AS is mapped.

Thus, in another aspect, the present invention also proposes an Application Server AS comprising:
- means for receiving from a Home Subscriber Server HSS a notification of a Public Deletion at HSS, as long as the AS has any subscription for said Public Identity at the HSS.

In an embodiment, said Application Server AS comprises:
- means for using a notification procedure including the sending by HSS to AS of data conformant to an XML schema defining data types,
- means for receiving notification of a Public Identity deletion at HSS, with a value of a data type indicating Public Identity deletion.

In an embodiment, said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

In an embodiment, when a Public User Identity or a Public Service Identity is deleted at the HSS, the Identity Type shall indicate DELETED.

In an embodiment, said Application Server AS comprises:
- means for receiving notifications indicating deletion at HSS of a Public User Identity or Public Service Identity, with the Identity Type DELETED in Diameter AVP User-Data on which the information element Data of a Sh-Notif request message sent by HSS to AS is mapped.

In an embodiment, said Application Server AS comprises:
- means for, upon notification of a Public Identity deletion, taking corresponding action as necessary.

In an embodiment, if the AS does not understand said Public Identity deletion notification, the AS ignores the received notification.

The detailed implementation of the above-mentioned means does not raise any special problem for a person skilled in the art, and therefore such means do not need to be more fully disclosed than has been made above, by their function, for a person skilled in the art.

## Claims

1. A method for notifying an Application Server AS of changes in data stored at a Home Subscriber Server HSS, said method comprising a step of:
- when a Public Identity is deleted at the HSS, notifying the AS of said Public Identity deletion.

2. A method according to claim 1, comprising a step of:
- if a Public Identity has any AS subscription to notifications, the HSS notifying AS of a deletion of said Public Identity at HSS.

3. A method for notifying an Application Server AS of changes in data stored at a Home Subscriber Server HSS, said method comprising a step of:
- if a Public Identity has any AS subscription to notifications, the HSS notifying AS of a deletion of said Public Identity at HSS.

4. A method according to any of claims 1 to 3, comprising the steps of:
- using a notification procedure including the sending by HSS to AS of data conformant to an XML schema defining data types,
- notifying the AS of a Public Identity deletion at HSS, with a value of a data type indicating Public Identity deletion.

5. A method according to claim 4, wherein said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

6. A method according to claim 5, wherein, when a Public User Identity or a Public Service Identity is deleted at the HSS, the Identity Type shall indicate DELETED.

7. A method according to claim 5 or 6, comprising a step of:
- indicating deletion at HSS of a Public User Identity or Public Service Identity, with the Identity Type DELETED in Diameter AVP User-Data on which the information element Data of a Sh-Notif request message sent by HSS to AS is mapped.

8. A method according to any of claims 1 to 7, comprising a step of:
- upon notification of a Public Identity deletion, the AS taking corresponding action as necessary.

9. A method according to any of claims 1 to 8, wherein, if the AS does not understand said Public Identity deletion notification, the AS ignores the received notification.

10. A Home Subscriber Server HSS comprising:
- means for, when a Public Identity is deleted at the HSS, notifying an Application Server AS of said Public Identity deletion.

11. A Home Subscriber Server HSS according to claim 10, comprising:
- means for, if a Public Identity has any AS subscription to notifications, notifying AS of a deletion of said Public Identity at HSS.

12. A Home Subscriber Server HSS, comprising:
- means for, if a Public Identity has any Application Server AS subscription to notifications, notifying AS of a deletion of said Public Identity at HSS.

13. A Home Subscriber Server HSS according to any of claims 10 to 12, comprising:
- means for using a notification procedure including the sending by HSS to AS of data conformant to an XML schema defining data types,
- means for notifying the AS of a Public Identity deletion at HSS, with a value of a data type indicating Public Identity deletion.

14. A Home Subscriber Server HSS according to claim 13, wherein said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

15. A Home Subscriber Server HSS according to claim 14, wherein, when a Public User Identity or a Public Service Identity is deleted at the HSS, the Identity Type shall indicate DELETED.

16. A Home Subscriber Server HSS according to any of claims 14 or 15, comprising:
- means for indicating deletion at HSS of a Public User Identity or Public Service Identity, with the Identity Type DELETED in Diameter AVP User-Data on which the information element Data of a Sh-Notif request message sent by HSS to AS is mapped.

17. An Application Server AS comprising:
- means for receiving notifications from a Home Subscriber Server HSS, of Public Identity deletion at the HSS.

18. An Application Server according to claim 17, comprising:
- means for receiving from a Home Subscriber Server HSS a notification of a Public Deletion at HSS, as long as the AS has any subscription for said Public Identity at the HSS.

19. An Application Server AS, comprising:
- means for receiving from a Home Subscriber Server HSS a notification of a Public Deletion at HSS, as long as the AS has any subscription for said Public Identity at the HSS.

20. An Application Server AS according to any of claims 17 to 19, comprising:
- means for using a notification procedure including the sending by HSS to AS of data conformant to an XML schema defining data types,
- means for receiving notification of a Public Identity deletion at HSS, with a value of a data type indicating Public Identity deletion.

21. An Application Server AS according to claim 20, wherein said data type corresponds to Identity Type, having possible values:
PUBLIC_USER_IDENTITY
DISTINCT_PSI
WILDCARDED_PSI
DELETED
wherein the value DELETED indicates Public Identity deletion at HSS.

22. An Application Server AS according to claim 21, wherein, when a Public User Identity or a Public Service Identity is deleted at the HSS, the Identity Type shall indicate DELETED.

23. An Application Server AS according to any of claims 21 or 22, comprising:
- means for receiving notifications indicating deletion at HSS of a Public User Identity or Public Service Identity, with the Identity Type DELETED in Diameter AVP User-Data on which the information element Data of a Sh-Notif request message sent by HSS to AS is mapped.

24. An Application Server AS according to any of claims 17 to 23, comprising:
- means for, upon notification of a Public Identity deletion, taking corresponding action as necessary.

25. An Application Server AS according to any of claims 17 to 24, wherein, if the AS does not understand said Public Identity deletion notification, the AS ignores the received notification.
